# EUROPEAN PATENT APPLICATION

(11) **EP 4 786 831 A1**
(43) Date of publication of application: **05.08.2026**
(21) Application number: 25867202.1
(22) Date of filing: 12.06.2025
(51) Int. Cl.: F16K 5/06

(54) **LOCKING-TYPE INTERLOCKING BALL VALVE**

(30) Priority: 16.12.2024 CN 202423091675 U
(71) Applicant: Watts Water Equipment Manufacturing (Ningbo) Co., Ltd., Ningbo, Zhejiang 315800 (CN)
(72) Inventor: WANG, Haoqiang, Ningbo, Zhejiang 315800 (CN); MAO, Hongyi, Ningbo, Zhejiang 315800 (CN); CHEN, Huafeng, Ningbo, Zhejiang 315800 (CN)
(74) Representative: CAPRI
(86) International application number: PCT/CN2025/100614
(87) International publication number: WO 2026/129572

(57) **Abstract**

An interlocking ball valve is related to the technical field of valve body equipment. The interlocking ball valve includes two valve bodies, each provided with a ball valve therein and connected via a snap-fit manner. The valve bodies have a locking hole and a positioning hole respectively at corresponding positions. A locking assembly is mounted on the valve body and includes a locking rod slidable within the locking hole. When the locking rod is inserted into the positioning hole, the two valve bodies are locked, thereby preventing relative rotational movement between the two ball valves after being coupled. This prevents accidental disconnection between the two ball valves caused by misoperation when the pipeline is in an open state, thus avoiding fluid leakage due to operational accidents.

## Description

This application claims priority to Chinese Patent Application No. 202423091675.X, titled "INTERLOCKING BALL VALVE", filed on December 16, 2024 with the China National Intellectual Property Administration, which is incorporated herein by reference in its entirety.

### FIELD

The present application relates to the technical field of valves, and in particular to an interlocking ball valve.

### BACKGROUND

A snap-on quick-connect liquid-cooled interlocking ball valve is a type of ball valve used in the field of liquid cooling that can be rapidly connected and disconnected. The connection between two ball valves is achieved via a snap-on mechanism, while external connections can be implemented in various forms such as threads, hose barbs (pagoda connectors), andclamp. This design ensures sealed fluid communication and disconnection between two fluid passages. Furthermore, it can be locked to prevent accidental disconnection when the passages are in a connected state, thereby avoiding fluid leakage.

Existing liquid-cooled ball valves often employ welding at both ends for connection. Consequently, when a problem occurs in a pipeline requiring maintenance or replacement, it cannot be processed rapidly and timely, leading to a failure of the fluid circuit in the thermal management system. On the other hand, although double-ball valve snap-on connections address the inability to quickly remove one end for maintenance, they lack an anti-misoperation (accidental disconnection) prevention device. This makes the valves prone to fluid leakage, which may lead to greater losses and a reduced safety factor.

However, current interlocking structures for a double-ball valve involve an excessive number of components and an overly complex design. The valve body requires numerous machining processes, leading to high manufacturing costs. Furthermore, the interlocking rod exhibits low shear resistance when in a locked state.

In summary, providing a double-ball valve with a stable locking effect has become an urgent problem to be solved by those skilled in the art.

### SUMMARY

In view of the above, an object of the present application is to provide a interlocking ball valve that utilizes a reduced number of components and exhibits superior locking stability.

To achieve the object, the present application provides the following technical solution.

A interlocking ball valve, includes:
two valve bodies and a locking assembly,
each of the two valve bodies is provided with a ball valve therein and connected via a snap-fit manner, and the two valve bodies are provided with a locking hole and a positioning hole at corresponding positions;
a locking assembly is mounted on the two valve bodies, the locking assembly includes a locking rod slidable within the locking hole, and the two valve bodies are locked when the locking rod is inserted into the positioning hole.

According to a further aspect of the present application, the locking assembly further includes:
a pin shaft mounted on the two valve bodies and connected to the ball valve;
a handle rotatably mounted on the pin shaft and configured to control the sliding of the locking rod within the locking hole.

According to a further aspect of the present application, the handle has a pushing portion and a rotating portion. The pushing portion is configured to control the sliding of the locking rod; the pin shaft is located between the handle and the valve body, and a distance between the rotating portion and the pin shaft is greater than a distance between the pushing portion and the pin shaft.

According to a further aspect of the present application, the locking assembly further includes a connecting rod. One end of the connecting rod is hinged to the pushing portion, and the other end of the connecting rod is hinged to the locking rod.

According to a further aspect of the present application, the valve body is provided with two positioning slots and a steel ball. The two positioning slots are respectively located at endpoints of rotation limits on both sides of the handle. The steel ball can rotate as the handle moves, and the position of the handle is secured when the steel ball is located within one of the positioning slots.

According to a further aspect of the present application, the valve body is provided with a guideway arranged coaxially with the pin shaft, and the two positioning slots are respectively located at two ends of the guideway.

According to a further aspect of the present application, the handle is provided with a steel ball hole; when the steel ball enters the steel ball hole, the handle is capable of rotating freely.

According to a further aspect of the present application, the handle is provided with a control hole communicating with the steel ball hole, a control rod is slidably disposed within the control hole, and an annular groove is provided at a middle portion of the control rod.

According to a further aspect of the present application, a return spring is mounted outside the control rod to drive the control rod to slide towards an exterior of the control hole.

According to a further aspect of the present application, a chamfer is formed on a side surface of the annular groove.

For the interlocking ball valve provided by the present application, during operation, the two valve bodies have identical structures at their contact positions. Each valve body is equipped with the ball valve and they are connected via the snap-fit manner. The valve bodies are provided with the locking hole and the positioning hole at corresponding locations, and the opening and closing of the ball valves control the fluid passage. The locking assembly is mounted on the valve body and includes the locking rod slidable within the locking hole. When the locking rod is inserted into the positioning hole, the two valve bodies are locked. Specifically, after the two valve bodies are securely connected via the snap-fit manner, the locking assembly controls the locking rod to slide within the locking hole and enter the positioning hole of the other valve body. This action achieves the interlocking of the two valve bodies, thereby preventing relative rotational movement between the two ball valves after they are coupled. Consequently, it prevents accidental disconnection between the two ball valves caused by misoperation while the pipeline is in an open state, thus avoiding fluid leakage due to operational accidents.

### BRIEF DESCRIPTION OF THE DRAWINGS

In order to more clearly illustrate the technical solutions in the embodiments of the present application or in the prior art, a brief description of the drawings required for describing the embodiments or the prior art will be provided below. It is apparent that the drawings described below are merely some embodiments of the present application. For those of ordinary skill in the art, other drawings may also be obtained based on these drawings without any creative work.
FIG. 1 is a schematic perspective view showing the structure of two valve bodies after being coupled, according to an embodiment of the present application;
FIG. 2 is a schematic perspective view showing the structure of a single valve body, according to an embodiment of the present application;
FIG. 3 is a schematic cross-sectional view showing the structure of two valve bodies after being coupled;
FIG. 4 is a schematic side cross-sectional view showing the structure of a single valve body;
FIG. 5 is a schematic front cross-sectional view showing the structure of a single valve body;
FIG. 6 is a schematic top cross-sectional view showing the structure of a single valve body;
FIG. 7 is an enlarged schematic view showing the structure of part A in FIG. 5.

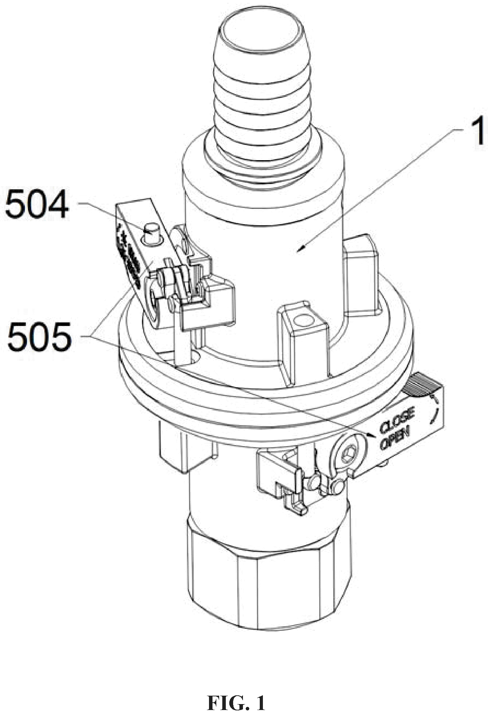

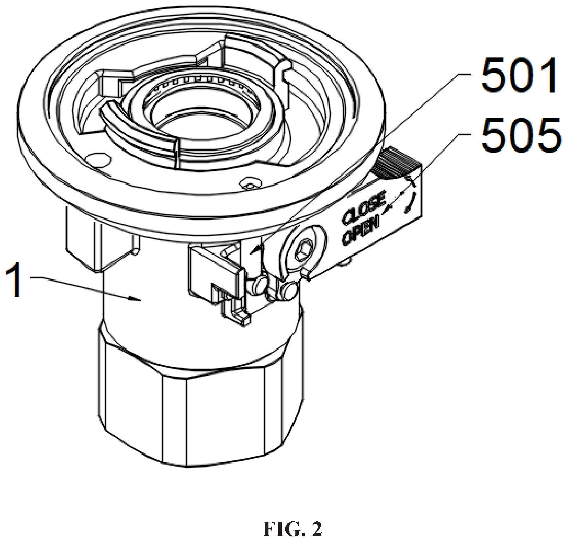

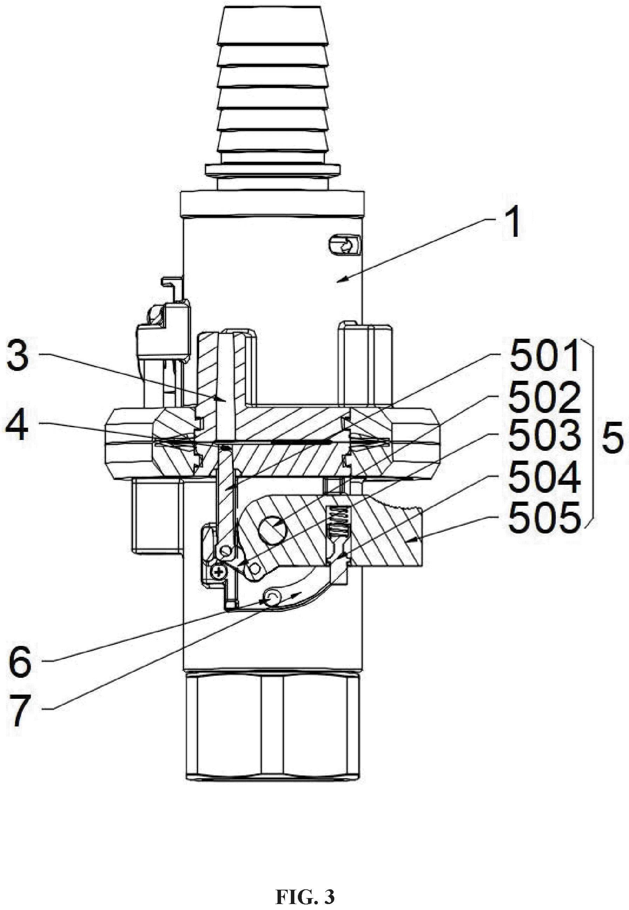

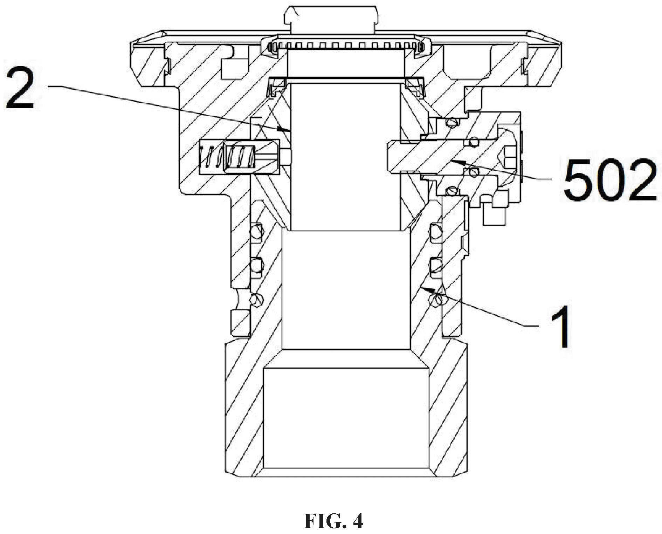

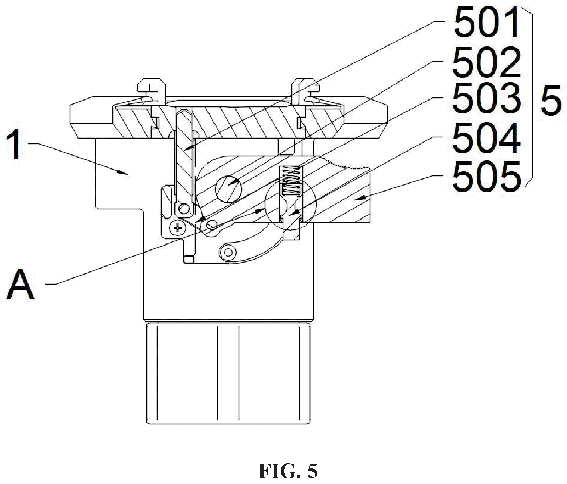

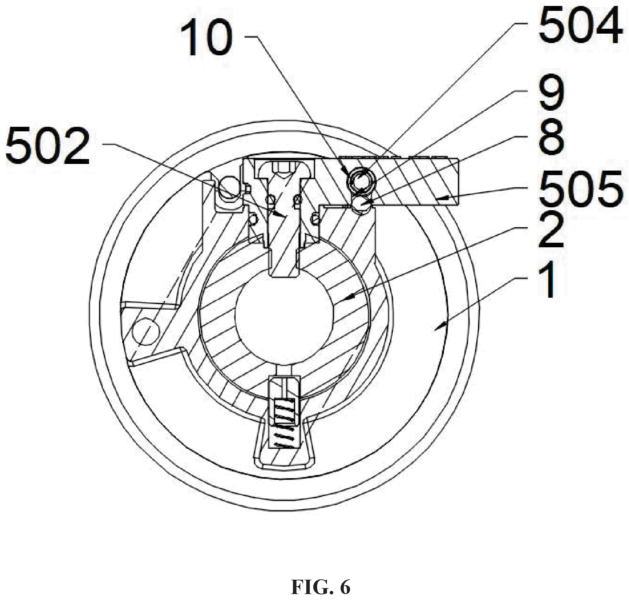

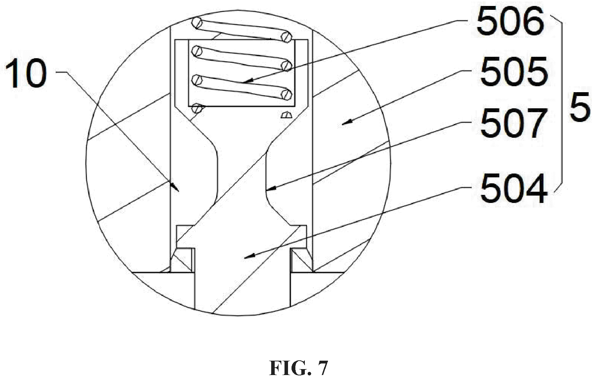

In FIG.1 - FIG. 7, Numeral references includes:
1. valve body; 2. ball valve; 3. positioning hole; 4. locking hole; 5. locking assembly; 501. locking rod; 502. pin shaft; 503. connecting rod; 504. control rod; 505. handle; 506. return spring; 507. annular groove; 6. positioning groove; 7. guideway; 8. steel ball; 9. steel ball hole; 10. control hole.

### DETAILED DESCRIPTION OF THE EMBODIMENTS

The technical solutions in the embodiments of the present application will be described clearly and completely below with reference to the accompanying drawings in the embodiments of the present application. Apparently, the described embodiments are merely a part of the embodiments of the present application, rather than all of the embodiments. Based on the embodiments of the present application, all other embodiments obtained by those of ordinary skill in the art without creative labor shall fall within the protection scope of the present application.

The core of the present application is to provide an interlocking ball valve that utilizes a reduced number of components and exhibits superior locking stability.

Referring to FIG. 1 to FIG. 7, an interlocking ball valve includes two valve bodies 1 and a locking assembly 5. Each of the two valve bodies 1 is provided with a ball valve 2 therein and connected via a snap-fit manner. The two valve bodies 1 are provided with a locking hole 4 and a positioning hole 3 respectively at corresponding positions. The locking assembly 5 is mounted on the valve body 1 and includes a locking rod 501 slidable within the locking hole 4. When the locking rod 501 is inserted into the positioning hole 3, the two valve bodies 1 can be locked.

It should be noted that, in the embodiments of the present application, the sizes of the positioning hole 3 and the locking hole 4 may be determined according to the dimensions of the valve body 1, and the positioning hole 3 and the locking hole 4 have the same size.

During operation, the two valve bodies 1 have identical structures at their contact positions. Each valve body 1 is provided with a ball valve 2 therein and connected via a snap-fit manner. The two valve bodies 1 are provided with the locking hole 4 and the positioning hole 3 respectively at corresponding positions, and the opening and closing of the ball valve 2 can control the fluid passage. The locking assembly 5 is mounted on the two valve bodies 1 and includes a locking rod 501 slidable within the locking hole 4. When the locking rod 501 is inserted into the positioning hole 3, the two valve bodies 1 can be locked. In other words, after the two valve bodies 1 are securely connected via the snap-fit manner, the locking assembly 5 controls the locking rod 501 to slide within the locking hole 4 and enter the positioning hole 3 of the other valve body 1. At this point, the locking of the two valve bodies 1 is achieved, thereby preventing relative rotational movement between the two ball valves 2 after they are coupled. This prevents an accidental disconnection between the two ball valves 2 caused by misoperation while the pipeline is in an open state, thus avoiding fluid leakage due to operational accidents.

Referring to FIG. 1 to FIG. 7, in order to enhance the operational performance of the valve body 1, in some embodiments, the locking assembly 5 further includes a pin shaft 502 and a handle 505. The pin shaft 502 is mounted on the valve body 1 and connected to the ball valve 2. The handle 505 is rotatably mounted on the pin shaft 502 and is configured to control the sliding of the locking rod 501 within the locking hole 4. In other words, the handle 505 realizes control over the locking rod 501 to ensure the secure connection of the two valve bodies 1. Meanwhile, the handle 505 is fixed to the pin shaft 502, which is rotatably mounted on one valve body 1, such that rotation of the handle 505 synchronously drives the ball valve 2 to rotate. Therefore, when the handle 505 rotates to control the locking rod 501 to insert into the positioning hole 3 of the other valve body 1, the ball valve 2 is simultaneously opened. At this point, the pipeline passage is opened, and the fluid exerts a certain resistance on the ball valve 2, which effectively applies a certain resistance onto the handle 505. This achieves a positioning effect on the locking rod 501, reducing the likelihood of accidental movement of the locking rod 501 during the opening process of the pipeline, and facilitating the stability of the pipeline passage during use.

It should be noted that, in the embodiments of the present application, the handle 505 and the pin shaft 502 are securely connected through the insertion of a limit post.

With further reference to FIG. 1 to FIG. 7, in some embodiments, the handle 505 is provided with a pushing portion and a rotating portion. The pin shaft 502 is located between the handle 505 and the valve body 1. The distance between the rotating portion and the pin shaft 502 is greater than the distance between the pushing portion and the pin shaft 502. In other words, the rotating portion serves as the position for providing power to rotate the handle 505, while the pushing portion is used to push the locking rod 501. By increasing the distance between the rotating portion and the pin shaft 502 to be greater than the distance between the pushing portion and the pin shaft 502, the operational effect on the locking rod 501 is enhanced by increasing the operating lever arm, thereby increasing the resistance of the locking rod 501 during the locking process.

Optionally, in some embodiments, the distance between the rotating portion and the pin shaft 502 is more than three times the distance between the pushing portion and the pin shaft 502.

Optionally, in some embodiments, a grip is provided on the rotating portion to facilitate gripping and operation by a user.

With further reference to FIG. 1 to FIG. 7, in some embodiments, the locking assembly 5 further includes a connecting rod 503. One end of the connecting rod 503 is hinged to the pushing portion, and the other end of the connecting rod 503 is hinged to the locking rod 501. The connecting rod 503 serves as a transitional connection between the locking rod 501 and the handle 505, enabling the handle 505 to control the sliding of the locking rod 501 during rotation.

Optionally, in some embodiments, the pushing portion is a protruding structure extending from the handle 505, which is configured to increase the driving radius of the connecting rod 503 while simultaneously reducing the overall size of the handle 505.

Referring to FIG. 1 to FIG. 7, in order to further enhance the firmness of the locking rod 501, in some embodiments, one of the two valve bodies 1 is provided with two positioning slots 6 and a steel ball 8. The two positioning slots 6 are respectively located at endpoints of rotation limits on both sides of the handle 505. The steel ball 8 rotates as the handle 505 moves. When the steel ball 8 is located within one of the positioning slots 6, the position of the handle 505 is fixed. In other words, the steel ball 8 moves along with the handle 505. Since the two positioning slots 6 are situated at the endpoints of the rotation limits on both sides of the handle 505, when the handle 505 moves to the position of either positioning slot 6, the steel ball 8 enters an interior of the positioning slot 6. This achieves the securing of the handle 505, ensuring that the locking rod 501 is effectively and firmly locked.

Optionally, in some embodiments, the dimensions of the positioning slot 6 may be determined according to the dimensions of the steel ball 8.

Optionally, in some embodiments, the handle 505 has a steel ball hole 9. When the steel ball 8 enters the steel ball hole 9, the handle 505 can rotate freely. In other words, by entering the steel ball hole 9 on the handle 505, the steel ball 8 is moved out of the positioning slot 6, thereby releasing the restriction on the position of the handle 505, at which point the handle 505 can rotate freely.

It should be noted that, in the embodiments of the present application, the diameter of the steel ball hole 9 is greater than that of the steel ball 8, allowing the steel ball 8 to enter and exit freely.

Optionally, in some embodiments, the valve body 1 is provided with a guideway 7 arranged coaxially with the pin shaft 502, and the two positioning slots 6 are respectively located at two ends of the guideway 7. The guideway 7 is configured to restrict the steel ball 8 while it rotates with the handle 505, thereby preventing the steel ball 8 from falling out.

It should be noted that, in the embodiments of the present application, the depth of the positioning slot 6 is greater than the depth of the guideway 7.

Referring to FIG. 1 to FIG. 7, in order to further facilitate the control of the steel ball 8, in some embodiments, the handle 505 has a control hole 10 communicating with the steel ball hole 9. A control rod 504 is slidably disposed within the control hole 10, and an annular groove 507 is formed at a middle portion of the control rod 504. In other words, the sliding of the control rod 504 within the control hole 10 changes the position of the annular groove 507. Therefore, when the annular groove 507 moves to the position of the steel ball hole 9, the steel ball 8 enters the annular groove 507, thereby moving the steel ball 8 out of the positioning slot 6. When the position of the control rod 504 is changed, the steel ball 8 is squeezed out from the annular groove 507 and enters the positioning slot 6, thereby achieving the securing of the handle 505 position.

Referring to FIG. 1 to FIG. 7, in some embodiments, a return spring 506 is mounted outside the control rod 504 to drive the control rod 504 to slide toward an exterior of the control hole 10. In other words, the return spring 506 is configured to bias the control rod 504 such that the annular groove 507 is normally kept away from the steel ball hole 9. This applies a pre-tension force to the position of the steel ball 8, thereby further enhancing the securing stability of the handle 505.

Optionally, in some embodiments, a chamfer is formed on a side surface of the annular groove 507. The chamfer is used to reduce resistance when the steel ball 8 is pushed out of the annular groove 507, thereby improving the smoothness during the positional change of the steel ball 8.

The various embodiments in this specification are described in a progressive manner. Each embodiment focuses on the differences from other embodiments, and for the same or similar parts among the various embodiments, reference may be made to each other.

The interlocking ball valve provided by the present application has been introduced in detail above. Specific examples are applied herein to elaborate on the principles and embodiments of the present application. The description of the aforementioned embodiments is only intended to assist in understanding the method and the core concept of the present application. It should be pointed out that for those of ordinary skill in the art, several improvements and modifications can be made to the present application without departing from the principles of the present application, and these improvements and modifications shall also fall within the protection scope of the claims of the present application.

## Claims

1. An interlocking ball valve, **characterized by** comprising:
two valve bodies (1), wherein each of the two valve bodies (1) is provided with a ball valve (2) therein and connected via a snap-fit manner, and the two valve bodies (1) have a locking hole (4) and a positioning hole (3) respectively at corresponding positions; and
a locking assembly (5) mounted on the two valve bodies (1), wherein the locking assembly (5) comprises a locking rod (501) slidable within the locking hole (4), and two valve bodies (1) are locked when the locking rod (501) is inserted into the positioning hole (3).

2. The interlocking ball valve according to claim 1, **characterized in that**, the locking assembly (5) further comprises:
a pin shaft (502) mounted on one valve body (1) and connected to the ball valve (2); and
a handle (505) rotatably mounted on the pin shaft (502) and configured to control the sliding of the locking rod (501) within the locking hole (4).

3. The interlocking ball valve according to claim 2, **characterized in that**, the handle (505) is provided with a pushing portion and a rotating portion, the pushing portion is configured to control the sliding of the locking rod (501), the pin shaft (502) is located between the handle (505) and the valve body (1), and a distance between the rotating portion and the pin shaft (502) is greater than a distance between the pushing portion and the pin shaft (502).

4. The interlocking ball valve according to claim 3, **characterized in that**, the locking assembly (5) further comprises:
a connecting rod (503), wherein one end of the connecting rod (503) is hinged to the pushing portion, and the other end of the connecting rod (503) is hinged to the locking rod (501).

5. The interlocking ball valve according to claim 2, **characterized in that**, the valve body (1) has two positioning slots (6) respectively located at endpoints of rotation limits on both sides of the handle (505); and
a steel ball (8) rotates as the handle (505) rotates, a position of the handle (505) is secured when the steel ball (8) is located within the two positioning slots (6).

6. The interlocking ball valve according to claim 5, **characterized in that**, the valve body (1) is formed with a guideway (7) arranged coaxially with the pin shaft (502), and the two positioning slots (6) are respectively located at two ends of the guideway (7).

7. The interlocking ball valve according to claim 6, **characterized in that**, the handle (505) has a steel ball hole (9), and the handle (505) rotates freely when the steel ball (8) enters the steel ball hole (9).

8. The interlocking ball valve according to claim 7, **characterized in that**, the handle (505) has a control hole (10) communicating with the steel ball hole (9), a control rod (504) is slidably disposed within the control hole (10), and an annular groove (507) is formed at a middle portion of the control rod (504).

9. The interlocking ball valve according to claim 8, **characterized in that**, a return spring (506) is mounted outside the control rod (504) to drive the control rod (504) to slide towards an exterior of the control hole (10).

10. The interlocking ball valve according to claim 8 or 9, **characterized in that**, a chamfer is formed on a side surface of the annular groove (507).
